# EUROPÄISCHE PATENTANMELDUNG

(11) **EP 1 147 915 A1**
(43) Veröffentlichungstag der Anmeldung: **24.10.2001**
(21) Anmeldenummer: 01109750.8
(22) Anmeldetag: 20.04.2001
(51) Int. Cl.: B41N 10/04, B41F 13/193, B32B 5/18, B32B 1/08, B32B 25/02

(54) **Drucktuch zur Verwendung auf Druckzylindern für insbesondere Offset-Druckmaschinen**

(30) Priorität: 10.04.2001 DE 10117409; 20.04.2000 DE 20007227 U
(71) Anmelder: ContiTech Elastomer-Beschichtungen GmbH, 30165 Hannover (DE)
(72) Erfinder: Füllgraf, Stefan, 37115 Duderstadt (DE); Spilker, Jürgen, 37191 Katlenburg-Lindau (DE); Tatsch, Hans-Jürgen, 37574 Einbeck (DE)
(74) Vertreter: Schneider, Egon

(57) **Zusammenfassung**

Ein Drucktuch zur Verwendung auf Druckzylindern für insbesondere Offset-Druckmaschinen, mit einer inneren, bei Einsatz des Drucktuches dem Druckzylinder zugewandten Trägerschicht (4), einer mikroporösen, kompressiblen Elastomer-Zwischenschicht (3) und einer äußeren Druckschicht (1) soll dahingehend weiterentwickelt werden, dass die auf das Drucktuch während des Druckvorganges einwirkenden Kräfte nicht zu erhöhten Spannungen in gefährdeten Bereichen des Drucktuches führen.

Erfindungsgemäß ist hierfür die innere, bei Einsatz des Drucktuches dem Druckzylinder zugewandte Trägerschicht als Metallschicht (4) in der Art eines biegsamen, der Krümmung des Druckzylinders anpassbaren Metallblechs ausgebildet, das zur angrenzenden Schicht über einen Haftvermittler (5) in Verbindung steht. Des weiteren wird ein Verfahren zur Herstellung eines solchen Drucktuches vorgestellt.

## Beschreibung

Die Erfindung betrifft ein Drucktuch zur Verwendung auf Druckzylindern für insbesondere Offset-Druckmaschinen sowie ein Verfahren zur Herstellung eines solchen gemäß Oberbegriff der Patentansprüche 1 und 10.

Aus der DE-OS 30 27 549 ist ein Drucktuch aus einem elastischen, zusammendrückbaren Druckelement mit geschlossenzelligem Schaum bekannt. An die den geschlossenzelligen Schaum enthaltende Schicht schließt sich in Richtung auf den Druckzylinder eine stabilisierende Schicht an, die für eine nur geringe Längenänderung in Maschinenrichtung sorgt. Eine solche Schicht kann unter bestimmten Umständen durch eine Klebeschicht ersetzt werden, um das Drucktuch auf dem Übertragzylinder zu befestigen.

Bei einer solchen Lösung bleibt offen, wie das Drucktuch am Zylinder zu befestigen ist und wie eine sichere Haftung der Schichten des Drucktuches gewährleistet wird.

Der Erfindung liegt die Aufgabe zugrunde, ein Drucktuch und ein Verfahren zur Herstellung eines solchen dahingehend weiterzuentwickeln, dass die auf das Drucktuch während des Druckvorganges einwirkenden Kräfte nicht zu erhöhten Spannungen in gefährdeten Bereichen des Drucktuches führen.

Die Aufgabe wird erfindungsgemäß einerseits dadurch gelöst, dass die innere, bei Einsatz des Drucktuches dem Druckzylinder zugewandte Trägerschicht als Metallschicht in der Art eines biegsamen, der Krümmung des Druckzylinders anpassbaren Metallblechs ausgebildet ist, das zur angrenzenden Schicht über einen Haftvermittler in Verbindung steht.

Zum anderen wird die Aufgabe erfindungsgemäß durch ein Verfahren gelöst, bei dem eine innere, bei Einsatz des Drucktuches dem Druckzylinder zugewandte Trägerschicht, gegebenenfalls eine mikroporöse und/oder kompressible Elastomer-Zwischenschicht, eine äußere Druckschicht und gegebenenfalls weitere Schichten verbunden werden mit der Maßgabe, dass als Trägerschicht ein biegsames, der Krümmung des Druckzylinders anpassbares Metallblech in Rollen- oder Streifenform kontinuierlich bereitgestellt wird und dass anschließend das Metallblech mit der angrenzenden Schicht verbunden wird.

Die Erfindung ist mit dem Vorteil verbunden, dass auf der Grundlage der zwischen der Trägerschicht und der angrenzenden Schicht des Drucktuches bestehenden Haftvermittler-Verbindung eine definierte Einleitung der auf die Druckschicht wirkenden Kräfte, wie sie beim Druckvorgang entstehen, in den Schichtaufbau des Drucktuches ermöglicht wird.

Bei der angrenzenden Schicht kann es sich um die mikroporöse, kompressible Zwischenschicht, aber auch um eine mit dieser in direkter Verbindung stehende gummielastische Ausgleichsschicht handeln.

Bei Verwendung der gummielastischen Ausgleichsschicht, die keine Poren enthält, als Bestandteil des Drucktuches werden die, in die mikroporöse, kompressible Elastomer-Zwischenschicht eingetragenen, Kräfte über die Ausgleichsschicht auf die Trägerschicht weitgehend gleichmäßig verteilt.

Weiterhin können die Seitenflächen des Drucktuches mit einer Elastomer-Auflage versehen sein. Eine solche Elastomer-Auflage verhindert, dass beim Druckvorgang eingesetzte Fluide oder auch der Säuberung der Drucktücher dienende Waschflüssigkeiten in das Drucktuch beispielsweise im Bereich von Gewebeeinlagen eindringen und letztendlich die Lebensdauer des Drucktuches verkürzen.

Dabei kann die Elastomer-Auflage, von der Druckschicht ausgehend in Richtung der Trägerschicht, in ihrer Dicke stetig zunehmen. Eine solche Ausführung verhindert wirkungsvoll, dass insbesondere die beim Druckvorgang auftretenden Tangentialkräfte zu überhöhten Spannungen am Fußpunkt des Drucktuches, d.h. im Übergangsbereich von der Trägerschicht zur angrenzenden Schicht des Drucktuchaufbaues führen.

Besteht zwischen der Elastomer-Auflage und der Ausgleichsschicht ein kontinuierlicher Übergang, wie er vorzugsweise über eine Heißvulkanisation erreicht werden kann, wird der beschriebene Vorteil weiter verstärkt.

In weiterer zweckmäßiger Ausführung der Erfindung enthält die mikroporöse, kompressible Elastomer-Zwischenschicht festigkeitssteigernde Materialien, wie Gewebelagen, Folienstücke oder faserartige Bestandteile, so dass auf einen, außerhalb der mikroporösen, kompressiblen Zwischenschicht und unter der Druckschicht angeordneten, Festigkeitsträger beispielsweise in Form von Gewebelagen verzichtet werden kann.

In bevorzugter Verfahrensdurchführung werden die äußere Druckschicht, die mikroporöse und/oder kompressible Elastomer-Zwischenschicht und gegebenenfalls weitere Schichten zu einer Einheit verbunden, wonach die Verbindung dieser Einheit zu der metallischen Trägerschicht hergestellt wird.

Für eine weitere Verbesserung der Produkteigenschaften wird die metallische Trägerschicht derart mit der an die Trägerschicht angrenzenden Schicht durch Verkleben oder Vemetzen verbunden, dass bei Einsatz des Drucktuches eine Mindesttrennkraft > 1,5 N x mm⁻¹ erreicht wird. Eine solche Möglichkeit besteht auch, wenn vor diesem Verfahrensschritt die an die Trägerschicht angrenzende Schicht bereits mit den übrigen Schichten des Drucktuchaufbaues in einem festen Verbund steht.

Soll insbesondere eine die Funktionsweise des Drucktuches bestimmende Dicke der mikroporösen und/oder kompressiblen Elastomer-Zwischenschicht eingestellt werden, so wird zweckmäßigerweise der aus der äußeren Druckschicht, der mikroporösen und/oder kompressiblen Elastomer-Zwischenschicht und gegebenenfalls weiteren Schichten bestehende Schichtenverbund durch Abtragen von Partikeln auf eine vorwählbare Schichtdicke gebracht, wonach durch Vernetzen oder Verkleben die Verbindung zwischen dem Schichtenverbund und der metallischen Trägerschicht hergestellt wird.

Gemäß einer weiteren zweckmäßigen Verfahrensdurchführung erfolgt nach dem Vemetzen oder Verkleben der metallischen Trägerschicht mit der an die metallische Trägerschicht angrenzenden Schicht ein Abtragen von Partikeln der Druckschicht. Damit kann die Dicke des Drucktuches auf das gewünschte Maß eingestellt werden. Auch bietet sich die Möglichkeit, die Rauigkeit bzw. Oberflächenstruktur des Drucktuches zu beeinflussen.

Die Erfindung soll nachfolgend anhand eines Ausführungsbeispieles näher erläutert werden.

Es zeigen
- Fig. 1: die Schichtfolge eines erfindungsgemäßen Drucktuches in Schnittdarstellung und
- Fig. 2: ein Drucktuch gemäß Fig. 1 mit einer Elastomer-Seitenwand-Beschichtung.

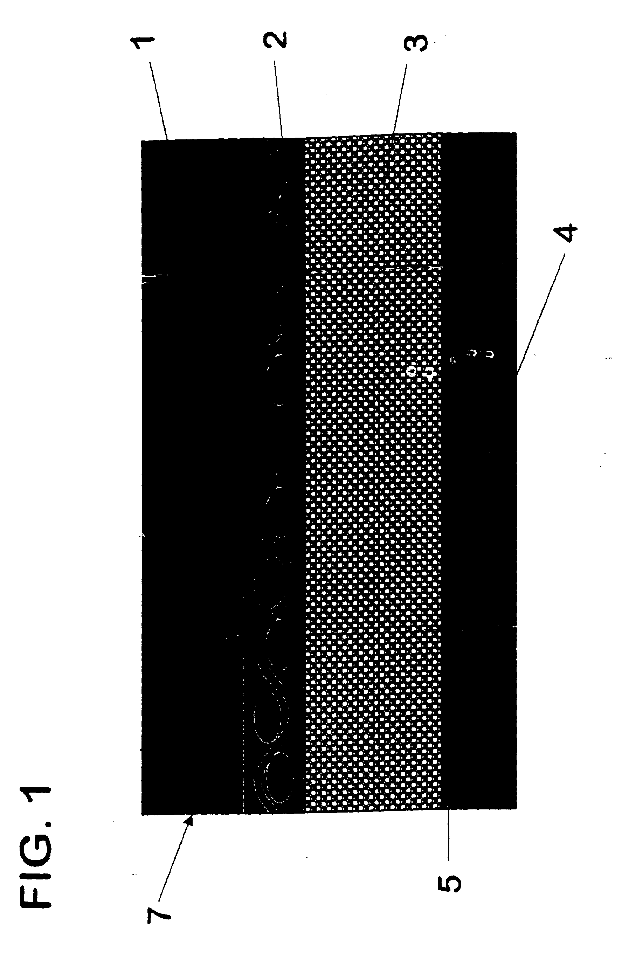

Das in Fig. 1 dargestellte Drucktuch besteht im Wesentlichen aus einer elastomeren Druckschicht 1, einer darunter angeordneten Gewebelage 2, einer mit der Gewebelage 2 verbundenen Elastomer-Zwischenschicht 3 und einer bei Einsatz des Drucktuches auf dem Druckzylinder aufliegenden Trägerschicht 4. Zur Herstellung einer dauerhaft haltbaren Verbindung der Elastomer-Zwischenschicht 3 mit der Trägerschicht 4 ist zwischen diesen Schichten ein Gummi-Metall-Haftvermittler 5 vorgesehen. Der Gummi-Metall-Haftvermittler 5 ist dabei so gewählt, dass die auf das Drucktuch während des Druckvorganges einwirkenden Kräfte von der Druckschicht 1 über den beschriebenen Schichtaufbau in die Trägerschicht 4 eingeleitet werden können, ohne Veränderungen bezüglich der Anbindung der Trägerschicht 4 an die Elastomer-Zwischenschicht 3 hervorzurufen. Als besonders vorteilhaft haben sich bestimmte Schichtdickenverhältnisse der einzelnen Schichten zueinander erwiesen. So beträgt die Dicke der Trägerschicht 4 ca. 0,2 mm, wogegen bei der Elastomer-Zwischenschicht 3 ein Dickenbereich von 0,85 bis 0,88 mm gewählt werden kann.

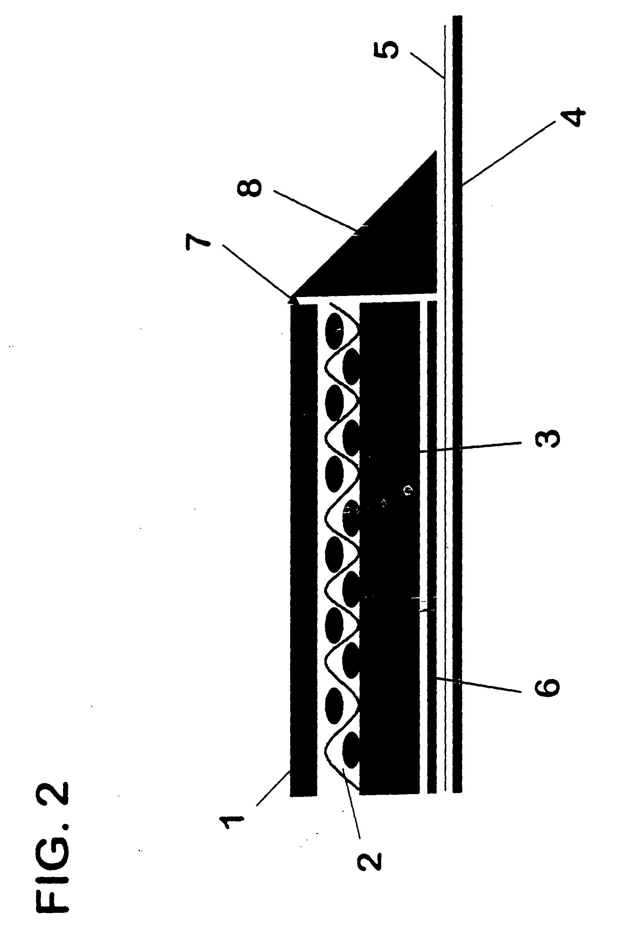

Aus der Schnittdarstellung eines Drucktuches gemäß Fig. 2 ist erkennbar, dass sich an den Schichtaufbau, der aus Druckschicht 1, Gewebelage 2 und Elastomer-Zwischenschicht 3 besteht, eine Ausgleichsschicht 6 aus elastomerem Material anschließt. Die Ausgleichsschicht 6 ist stoffschlüssig mit der Elastomer-Zwischenschicht 3 und über den Gummi-Metall-Haftvermittler 5 mit der Trägerschicht 4 verbunden. Weiterhin steht die Ausgleichsschicht 6 in stoffschlüssiger Verbindung zu einer auf der Seitenwand 7 des Drucktuches vorgesehenen Elastomer-Auflage 8, die ihrerseits stoffschlüssig über die Gesamthöhe der Seitenwand 7 an dieser haftet. Damit wird insbesondere sichergestellt, dass beim Druckvorgang benutzte Fluide und Waschflüssigkeiten nicht in die Gewebelage 2 eindringen und den innigen Verbund des Schichtaufbaues beeinträchtigen können. Gleichwohl liegt es im Rahmen der Erfindung, auf die Gewebelage 2 zu verzichten und festigkeitssteigernde Materialien in die kompressible Elastomer-Zwischenschicht 3 einzubringen, so dass gegebenenfalls eine Verbindung der Elastomer-Auflage 8 mit dem Schichtaufbau nicht über die Gesamthöhe der Seitenwand 7 des Drucktuches gegeben sein muss.

Des Weiteren kann die Elastomer-Auflage 8, wie aus Fig. 2 erkennbar, in ihrer Dicke kontinuierlich in Richtung auf die Trägerschicht 4 zunehmen, so dass eine signifikant große Fläche der Elastomer-Auflage 8 über den Gummi-Metall-Haftvermittler 5 in stoffschlüssiger Verbindung zur Trägerschicht 4 steht. Hierdurch können insbesondere Tangentialkräfte, wie sie bei Gebrauch des Drucktuches, also bei rotierendem Druckzylinder entstehen, derart in den Schichtaufbau des Drucktuches eingeleitet werden, dass ein unkritischer Spannungszustand am Fußpunkt des Drucktuches, d.h. im Übergangsbereich der Elastomer-Auflage 8 in die Ausgleichsschicht 6 erreicht wird.

## Patentansprüche

1. Drucktuch zur Verwendung auf Druckzylindem für insbesondere Offset-Druckmaschinen, mit einer inneren, bei Einsatz des Drucktuches dem Druckzylinder zugewandten Trägerschicht (4), einer mikroporösen, kompressiblen Elastomer-Zwischenschicht (3) und einer äußeren Druckschicht (1),
**dadurch gekennzeichnet,**
**dass** die innere, bei Einsatz des Drucktuches dem Druckzylinder zugewandte Trägerschicht als Metallschicht (4) in der Art eines biegsamen, der Krümmung des Druckzylinders anpassbaren Metallblechs ausgebildet ist, das zur angrenzenden Schicht über einen Haftvermittler (5) in Verbindung steht.

2. Drucktuch nach Anspruch 1, **dadurch gekennzeichnet, dass** es sich bei der angrenzenden Schicht um die mikroporöse, kompressible Zwischenschicht (3) handelt.

3. Drucktuch nach Anspruch 1, **dadurch gekennzeichnet, dass** die angrenzende Schicht als gummielastische Ausgleichsschicht (6) ausgebildet ist, die in direkter Verbindung zur mikroporösen, kompressiblen Zwischenschicht (3) steht.

4. Drucktuch nach Anspruch 2 oder 3, **dadurch gekennzeichnet, dass** die Seitenflächen (7) des Drucktuches mit einer Elastomer-Auflage (8) versehen sind.

5. Drucktuch nach Anspruch 4, **dadurch gekennzeichnet, dass** die Elastomer-Auflage (8) von der Druckschicht (1) ausgehend in Richtung der Trägerschicht (4) in ihrer Dicke stetig zunimmt.

6. Drucktuch nach Anspruch 3, **dadurch gekennzeichnet, dass** zwischen der Elastomer-Auflage (8) und der Ausgleichsschicht (6) eine kontinuierliche Verbindung besteht.

7. Drucktuch nach Anspruch 6, **dadurch gekennzeichnet, dass** die kontinuierliche Verbindung zwischen der Elastomer-Auflage (8) und der Ausgleichsschicht (6) infolge eines Vulkanisationsprozesses, vorzugsweise einer Heißvulkanisation, entsteht.

8. Drucktuch nach Anspruch 1, **dadurch gekennzeichnet, dass** die mikroporöse, kompressible Elastomer-Zwischenschicht (3) festigkeitssteigemde Materialien enthält.

9. Drucktuch nach Anspruch 8, **dadurch gekennzeichnet, dass** als festigkeitssteigernde Materialien Gewebelagen, Folienstücke oder faserartige Bestandteile zum Einsatz kommen.

10. Verfahren zur Herstellung eines Drucktuches zur Verwendung auf Druckzylindem für insbesondere Offset-Druckmaschinen, bei dem eine innere, bei Einsatz des Drucktuches dem Druckzylinder zugewandte Trägerschicht, ggf. eine mikroporöse und/oder kompressible Elastomer-Zwischenschicht, eine äußere Druckschicht und gegebenenfalls weitere Schichten verbunden werden, **dadurch gekennzeichnet, dass** als Trägerschicht ein biegsames, der Krümmung des Druckzylinders anpassbares Metallblech in Rollen- oder Streifenform kontinuierlich bereitgestellt wird und dass anschließend das Metallblech mit der angrenzenden Schicht verbunden wird.

11. Verfahren nach Anspruch 10, **dadurch gekennzeichnet, dass** die äußere Druckschicht, die mikroporöse und/oder kompressible Elastomer-Zwischenschicht und gegebenenfalls weitere Schichten zu einer Einheit verbunden werden, wonach die Verbindung dieser Einheit zu der metallischen Trägerschicht hergestellt wird.

12. Verfahren nach Anspruch 10 oder 11, **dadurch gekennzeichnet, dass** die an die metallische Trägerschicht angrenzende Schicht mit der Trägerschicht durch Verkleben oder Vernetzen verbunden wird, so dass eine Mindesttrennkraft > 1,5 N x mm⁻¹ erzielt wird.

13. Verfahren nach Anspruch 11, **dadurch gekennzeichnet, dass** der aus der äußeren Druckschicht, der mikroporösen und/oder kompressiblen Elastomer-Zwischenschicht und gegebenenfalls weiteren Schichten bestehende Schichtenverbund durch Abtragen von Partikeln auf eine vorwählbare Schichtdicke gebracht wird, wonach durch Vernetzen oder Verkleben die Verbindung zwischen dem Schichtenverbund und der metallischen Trägerschicht hergestellt wird.

14. Verfahren nach Anspruch 10 oder 12, **dadurch gekennzeichnet, dass** nach dem Vernetzen oder Verkleben der metallischen Trägerschicht mit der an die metallische Trägerschicht angrenzenden Schicht ein Abtragen von Partikeln der Druckschicht erfolgt.
